(19) Europäisches Patentamt / European Patent Office / Office européen des brevets

(11) **EP 1 810 470 B1**

(12) **FASCICULE DE BREVET EUROPEEN**

(45) Date de publication et mention de la délivrance du brevet:
**23.08.2017 Bulletin 2017/34**

(21) Numéro de dépôt: **05798997.2**

(22) Date de dépôt: **24.10.2005**

(51) Int Cl.:
*H04L 25/02* *(2006.01)*    *H04L 25/03* *(2006.01)*

(86) Numéro de dépôt international:
**PCT/EP2005/055488**

(87) Numéro de publication internationale:
**WO 2006/051036 (18.05.2006 Gazette 2006/20)**

(54) **PROCEDE DE RECEPTION D'UN SIGNAL MULTIPORTEUSE METTANT EN OEUVRE AU MOINS DEUX ESTIMATIONS D'UN CANAL DE PROPAGATION ET DISPOSITIF DE RECEPTION CORRESPONDANT**

VERFAHREN ZUM EMPFANG EINES MEHRTRÄGERSIGNALS, DAS WENIGSTENS ZWEI SCHÄTZUNGEN EINES KANALS VERWENDET UND ENTSPRECHENDER EMPFÄNGER

METHOD FOR RECEIVING A MULTICARRIER SIGNAL USING AT LEAST TWO ESTIMATIONS OF A PROPAGATION CHANNEL AND CORRESPONDING RECEPTION DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.11.2004 FR 0411950**

(43) Date de publication de la demande:
**25.07.2007 Bulletin 2007/30**

(73) Titulaire: **TDF**
**75732 Paris Cedex 15 (FR)**

(72) Inventeurs:
• **JAHAN, Bruno**
  **F-35190 TINTENIAC (FR)**
• **LANOISELEE, Marc**
  **F-35200 RENNES (FR)**
• **LOUIN, Pierrick**
  **F-35700 RENNES (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A- 0 762 703    EP-A- 1 339 196**
**EP-A- 1 414 177    US-A1- 2003 128 656**

**EP 1 810 470 B1**

**Description**

**1. Domaine de l'invention**

Le domaine de l'invention est celui des communications numériques, appliquées notamment dans des systèmes de diffusion numérique hertzienne, du type DAB (de l'anglais « Digital Audio Broadcasting » pour « radiodiffusion numérique »), DVB-T (de l'anglais « Digital Video Broadcasting Terrestrial » pour « télévision numérique terrestre »), ou DRM (pour « Digital Radio Mondiale »), et dans les télécommunications (ADSL, Hyperlan2, etc.).

L'invention concerne notamment, mais non exclusivement, les récepteurs du type DAB, DVB-T, DVB-H, DRM qui utilisent une démodulation de type OFDM (« Orthogonal Frequency Division Multiplex » en anglais, pour « Multiplexage par répartition orthogonale de la fréquence »), laquelle est de plus en plus utilisée dans les domaines précités.

Plus précisément, l'invention propose de diminuer, en réception, l'influence de brouilleurs co-canaux, pour des signaux utilisant notamment une modulation de type OFDM.

**2. L'art antérieur**

**2.1. Rappel sur le principe de la modulation OFDM**

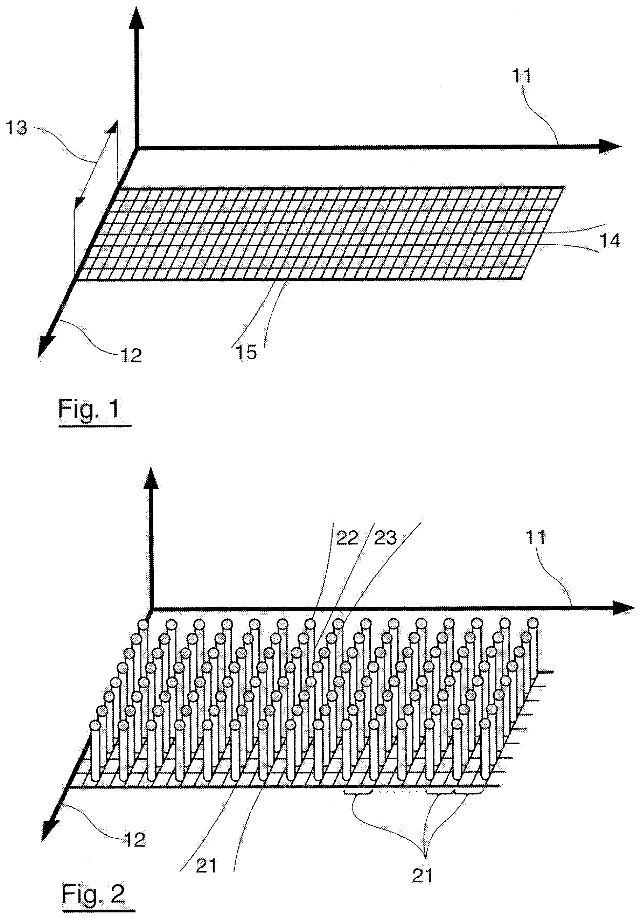

La modulation OFDM consiste à répartir dans l'espace temps/fréquence des symboles de durée Tu (dit temps-symbole utile) sur une pluralité de fréquences porteuses modulées indépendamment, par exemple en QPSK (de l'anglais « Quadrature Phase Shift Keying » pour « modulation à déplacement de phase en quadrature ») ou QAM (de l'anglais « Quadrature Amplitude Modulation » pour « Modulation d'amplitude en quadrature ») notamment à 16, 64, 256, ..., états. L'OFDM découpe ainsi le canal en cellules selon les axes du temps 11 et des fréquences 12, comme illustré sur la figure 1. Chacune des porteuses est orthogonale à la précédente.

Le canal, de largeur prédéterminée 13, est décomposé en une suite de sous-bandes de fréquence 14 et d'une suite de segments temporels 15 (encore appelés intervalles de temps).

A chaque cellule temps/fréquence est attribuée une porteuse dédiée. On va donc répartir l'information à transporter sur l'ensemble de ces porteuses, modulée chacune à faible débit, par exemple par une modulation du type QPSK ou QAM. Un symbole OFDM comprend l'ensemble des informations portées par l'ensemble des porteuses à un instant t.

Cette technique de modulation est notamment efficace dans les situations où l'on rencontre des multitrajets. Ainsi, comme illustré sur la figure 2 qui présente un ensemble de symboles OFDM 21, une même suite de symboles arrivant à un récepteur par deux chemins différents se présente comme la même information arrivant à deux instants différents et qui s'additionnent. Ces échos provoquent deux types de défauts :

- l'interférence intra symbole : addition d'un symbole avec lui-même légèrement déphasé ;
- l'interférence inter symbole : addition d'un symbole avec le suivant et/ou le précédent légèrement déphasé.

Entre chaque symbole transmis, on insère une zone « morte » appelée intervalle de garde 22, dont la durée Δ est choisie suffisamment grande par rapport à l'étalement des échos. Ces précautions vont limiter l'interférence inter-symbole (celle-ci étant absorbée par l'intervalle de garde). Ainsi chaque symbole OFDM 21 comprend un intervalle de garde 22 et des données 23.

A la réception, les porteuses peuvent avoir subi en outre soit une atténuation (échos destructifs), soit une amplification (échos constructifs) et/ou une rotation de phase.

Pour calculer la fonction de transfert du canal, en vue d'effectuer une égalisation du signal avant démodulation, on insère également des porteuses pilotes de synchronisation (d'amplitude souvent supérieure aux porteuses de données utiles), encore appelées pilotes de référence. La valeur et l'emplacement de ces pilotes de référence dans l'espace temps/fréquence sont prédéfinis et connus des récepteurs.

La figure 3 présente ainsi la structure OFDM en mode A d'un ensemble de symboles DRM, en illustrant la répartition des pilotes de référence 31 dans l'espace temps/fréquence. Cette structure est notamment décrite dans la norme DRM ETSI ES 201 980.

La figure 4 présente un autre exemple de structure OFDM d'un ensemble de symboles DVB-T, en illustrant la répartition des pilotes de référence 41 parmi les données utiles 42 dans l'espace temps/fréquence.

Après une interpolation en temps et en fréquence, on obtient une estimation de la réponse du canal, plus ou moins pertinente en fonction du nombre de pilotes de référence et de leur répartition dans le domaine temps/fréquence.

Ainsi, les pilotes de référence insérés dans le signal multiporteuse sont utilisés pour estimer le canal de propagation. L'estimation du canal de propagation permet notamment de corriger les données reçues, encore appelées pilotes de données, au niveau du récepteur (égalisation), et d'obtenir la réponse impulsionnelle du canal de propagation.

La réponse impulsionnelle obtenue peut alors être utilisée pour affiner la synchronisation temporelle du (ou des) récepteur(s).

## 2.2. Application dans les bandes AM (DRM)

La modulation OFDM est de plus en plus utilisée dans la diffusion numérique car elle est très bien adaptée aux variations du canal radio, qui sont essentiellement liées aux échos et à l'effet Doppler. Elle a ainsi été sélectionnée pour la radiodiffusion numérique dans les bandes AM (DRM).

Les ingénieurs, pour choisir la structure OFDM la mieux adaptée, étudient d'abord les caractéristiques du canal radio, qui varient en fonction de la fréquence d'émission, de la bande passante du signal mais aussi, pour la radio numérique dans les bandes AM (DRM), des conditions de propagation entre le jour et la nuit et des cycles solaires.

Les récepteurs utilisés pour la démodulation OFDM exploitent essentiellement la réponse du canal calculée à partir des pilotes de référence. La justesse de cette estimation dépend donc de la proportion de pilotes de référence insérés dans les symboles OFDM.

## 2.3. Les signaux interférents (ou brouilleurs)

Lors d'une transmission entre un émetteur et un récepteur, des signaux parasites peuvent venir s'ajouter au signal utile, risquant de perturber la réception de ce dernier s'ils dépassent un seuil donné.

Ce seuil dépend notamment des caractéristiques du récepteur, et du canal sur lequel le brouillage est reçu par rapport au canal du signal utile. On parle ainsi de « brouillage co-canal » lorsque les signaux interférents et le signal utile sont véhiculés sur le même canal, et de « brouillage canal adjacent » lorsque les signaux interférents et le signal utile sont véhiculés sur des canaux adjacents.

Dans la bande AM par exemple, le signal utile peut être perturbé par un brouillage de type impulsif apporté par les activités humaines (automobile, équipements industriels et médicaux, systèmes d'éclairage, ...) et/ou par un brouillage en bande étroite lié aux autres transmissions dans ces bandes AM (radio AM, systèmes de communications, radars, ...).

Il est à noter que la présence de ces autres transmissions empêche une augmentation de la puissance d'une bande DRM, qui perturberait sinon les bandes voisines, et empêcherait par exemple une réception de bonne qualité des signaux analogiques AM classiques. Les récepteurs actuels sont en effet équipés de filtres insuffisants pour éliminer parfaitement les bandes voisines.

Plusieurs techniques d'élimination, ou à tout le moins de réduction, des brouilleurs sont déjà connues de l'Homme du Métier.

Ainsi, K. Shibuya et al. présentent, dans la demande de brevet EP 1087559 (*« Canceller for jamming wave by interference »*), une technique d'annulation du brouillage créé par des interférences, dans un système mettant en oeuvre une modulation de type OFDM.

Frank S.Gutleber et al. proposent également, dans le brevet CA1186742 (*« Interference cancelling system for a mobile subscriber access communications system »*), un système d'annulation d'interférence dans un système de communication classique, ne mettant pas en oeuvre de modulation de type OFDM.I1 est également connu du brevet EP1339196, NTT DOCOMO INC, une technique de suppression des interférences affectant un signal reçu.

Dans le domaine des radars, une technique de mesure du brouillage a également été proposée par Bernard L. Lewis et al., dans le brevet US 5 359 329.

Finalement, M. Lanoiselee et al. présentent une technique d'annulation de brouilleur dans le brevet FR 2 753 592 *(« Procédé de démodulation de signaux numériques émis par salves robuste aux brouilleurs à bande étroite »*), basée sur un traitement fréquentiel des brouilleurs.

## 2.4. Inconvénients des techniques de l'art antérieur

Ces techniques d'élimination des brouilleurs sont basées sur une connaissance a priori des brouilleurs et/ou sur la constance du signal utile, et se situent donc en amont des étapes d'estimation de canal et/ou d'égalisation des données reçues.

Elles nécessitent généralement l'identification de « pics » situés au-dessus de la moyenne des pilotes du symbole OFDM, avant de pouvoir estimer correctement le canal et égaliser les pilotes de données. Ainsi, selon l'art antérieur, on observe les « pics » situés dans le domaine temporel, et on les élimine.

Cependant, ces solutions sont complexes et difficiles à mettre en oeuvre, pour deux raisons principales :

- d'une part les pilotes de données des symboles OFDM sont de niveau très différents, du fait des modulations à plusieurs niveaux (MAQ16, MAQ64,...) ;

- d'autre part, le canal engendre de grosse variation, en amplitude et en phase, entre les pilotes.

### 3. **Objectifs de l'invention**

L'invention a notamment pour objectif de pallier ces inconvénients de l'art antérieur.

Plus précisément, un objectif de l'invention est de fournir une technique permettant de détecter un ou des signaux interférents affectant un signal de transmission de données multiporteuse, par exemple de type OFDM, de façon simple et efficace.

Notamment, un objectif de l'invention est de diminuer les dégradations apportées par des brouilleurs co-canaux sur un signal utile, en particulier pour des canaux de propagation présentant de fortes variations en temps et/ou en fréquence.

Un autre objectif de l'invention est de proposer une telle technique permettant d'améliorer les performances de réception et de décodage des données au niveau d'un récepteur.

Notamment, un objectif de l'invention est de fournir une telle technique permettant d'améliorer l'estimation du canal de propagation de tels signaux multiporteuses, et d'affiner la synchronisation des récepteurs.

Encore un autre objectif de l'invention est de proposer une telle technique qui soit facile à mettre en oeuvre, tout en restant à un coût raisonnable.

### 4. **Caractéristiques principales de l'invention**

Ces objectifs, ainsi que d'autres qui apparaîtront par la suite sont atteints à l'aide d'un procédé de réception d'un signal multiporteuse formé d'une succession temporelle de symboles comprenant chacun une pluralité de porteuses portant des données, au moins un des symboles comprenant au moins un pilote de référence.

Selon l'invention, un tel procédé met en oeuvre les étapes suivantes :

- première estimation d'un canal de propagation à partir d'au moins un premier ensemble desdites données, selon une première technique d'estimation tenant compte du ou desdits pilotes de référence ;
- au moins une seconde estimation dudit canal de propagation à partir dudit premier ensemble, selon une seconde technique d'estimation distincte de ladite première technique ;
- comparaison desdites première et seconde estimations, délivrant un signal d'erreur ;
- détection d'au moins un signal interférent dans ledit canal de propagation, par analyse d'au moins un pic observé dans ledit signal d'erreur.

L'invention propose ainsi, en réception, une technique de détection permettant de localiser efficacement les signaux interférents pouvant affecter le signal multiporteuse, dit signal utile, réalisée en comparant et en analysant les différentes estimations du canal de propagation.

On peut notamment remarquer que les deux estimations sont mises en oeuvre à partir des mêmes données courantes, selon des méthodes d'estimation distinctes.

Ainsi, le procédé selon l'invention permet de comparer, par exemple, l'estimation de canal sur chaque porteuse formant un symbole (première estimation) et l'estimation de la valeur du canal sur une porteuse en fonction de toutes les autres (seconde estimation) pour déterminer l'emplacement des brouilleurs.

La seconde estimation de canal peut notamment être effectuée à partir de ladite première estimation.

Cette technique de détection des signaux interférents est notamment bien adaptée aux brouillages en bande étroite.

De manière avantageuse, le procédé selon l'invention comprend également une étape de correction d'au moins une desdites estimations, en fonction dudit signal d'erreur, de sorte à délivrer une estimation corrigée.

L'invention propose ainsi de déterminer l'emplacement des brouilleurs à partir de l'analyse de l'estimation de canal pour ensuite agir sur les porteuses (pilotes de référence et/ou pilotes de données) affectées par ces brouilleurs. En effet, l'estimation corrigée obtenue en analysant le signal d'erreur peut être utilisée pour égaliser les données portées par les porteuses du signal multiporteuse, ce qui permet donc d'améliorer le décodage des données.

Préférentiellement, le signal d'erreur présente au moins un pic d'erreur, correspondant à un signal interférent, et l'étape de correction est mise en oeuvre pour au moins un desdits pics d'erreur.

Ainsi, l'emplacement des signaux interférents est déterminé à partir des pics observés dans le signal d'erreur. Connaissant l'emplacement des signaux interférents, on peut alors corriger les pilotes de données affectés par ces signaux.

Avantageusement, l'étape de correction d'erreur est mise en oeuvre pour au moins un pic d'erreur supérieur à un premier seuil prédéterminé.

Seules les perturbations significatives affectant le signal multiporteuse sont ainsi éliminées, ou à tout le moins réduites.

Par exemple, pour des fréquences porteuses normalisées à 1, on peut considérer que l'étape de correction d'erreur est mise en oeuvre lorsque le premier seuil prédéterminé est compris entre 0,01 et 0,03.

Selon une première variante de réalisation, l'étape de correction met en oeuvre une réduction d'une valeur de confiance associée à au moins une desdites porteuses du signal multiporteuse correspondant, dans le plan temps/fréquence, au voisinage d'au moins un desdits pics d'erreur.

Il s'agit donc d'une décision douce (« soft » en anglais).

Notamment, la réduction d'une valeur de confiance peut être mise en oeuvre sur les valeurs de confiance associées aux N porteuses précédant et/ou aux N porteuses suivant une porteuse située à l'emplacement d'un desdits pics d'erreur, dans le temps et/ou en fréquence.

On diminue ainsi la confiance accordée sur l'estimation de canal sur une région autour des pics d'erreurs détectés, en réduisant la valeur de confiance associée aux porteuses situées à des emplacements correspondant aux emplacements (ou au voisinage) des pics d'erreurs.

Par exemple, on peut choisir N égal à 2. On diminue ainsi la valeur de confiance associée aux deux porteuses précédant et aux deux porteuses suivant la porteuse située à l'emplacement temps/fréquence d'un pic d'erreur.

Selon une deuxième variante de réalisation, l'étape de correction met en oeuvre une suppression d'au moins une desdites porteuses du signal multiporteuse correspondant, dans le plan temps/fréquence, au voisinage d'au moins un desdits pics d'erreur.

Il s'agit alors d'une décision dure (« hard » en anglais).

Selon cette variante de réalisation, on met à zéro les données associées aux porteuses affectées par le(s) signal(aux) interférent(s) (c'est-à-dire qu'on met à zéro la valeur de confiance associée aux porteuses situées à des emplacements correspondant aux emplacements (ou au voisinage des pics d'erreurs). On supprime ainsi les pilotes de données et/ou de référence affectés par les brouilleurs.

Il est également possible, comme proposé pour la première variante de réalisation, de mettre à zéro les porteuses sur toute une région autour des pics d'erreurs détectés correspondants.

De manière préférentielle, l'étape de correction n'agit que sur un nombre maximal prédéterminé M de pics d'erreur, à un instant donné, pour éviter bien sûr une perte complète des données, en cas de canal très perturbé.

On choisit généralement un nombre maximal M de 7 ou 8 pics d'erreur dans le cas d'un système de transmission de type DRM à 210 porteuses.

Ainsi, si on choisit N égal à 2 et M égal à 7 dans un système de transmission de type DRM à 210 porteuses, l'étape de correction met en oeuvre une réduction de la valeur de confiance associée aux 35 porteuses correspondant, dans le plan temps/fréquence, au voisinage des 7 pics d'erreur supérieurs à un seuil prédéterminé.

On évite ainsi, en limitant le nombre de corrections possibles, une trop forte dégradation des performances intrinsèques au système, liée aux « trous » introduits par la réduction (voire même la mise à zéro) des valeurs de confiance associées aux porteuses du signal multiporteuse correspondant, dans le plan temps/fréquence, au voisinage d'au moins un pic d'erreur.

De façon avantageuse, le procédé de réception selon l'invention comprend également une étape de lissage du signal d'erreur, précédant l'étape de correction.

Cette étape de lissage peut notamment mettre en oeuvre au moins un filtre récursif.

Ce lissage permet ainsi une limitation des fausses détections.

Ce procédé de réception est également remarquable en ce que ladite première technique d'estimation met en oeuvre une étape d'interpolation en temps et/ou en fréquence, à partir du ou desdits pilotes de référence.

On obtient ainsi une estimation de la réponse du canal de propagation plus ou moins pertinente en fonction du nombre de pilotes de référence et de leur répartition dans le domaine temps/fréquence.

De manière préférentielle, la seconde technique d'estimation est une estimation temporelle et/ou fréquentielle de proche en proche mettant en oeuvre une étape de filtrage adaptatif.

On réalise ainsi une prédiction linéaire sur l'estimation du canal, tenant compte des événements passés pour déterminer les événements futurs.

Cette étape de filtrage peut notamment mettre en oeuvre un algorithme de type gradient stochastique.

Un tel algorithme, encore appelé « LMS » en anglais (pour « Least Mean Square »), permet par exemple de calculer les coefficients des filtres adaptatifs.

Cet algorithme est bien adapté à l'invention car il est stable et peu complexe en nombre d'opérations.

Avantageusement, le procédé de réception selon l'invention met en oeuvre, en outre, au moins une des étapes suivantes :

- égalisation des données en fonction de ladite estimation corrigée ;
- décodage de canal en fonction de ladite estimation corrigée ;
- calcul de la réponse impulsionnelle dudit canal de propagation, en fonction dudit signal d'erreur et desdites première et/ou seconde estimations et/ou de ladite estimation corrigée.

Ainsi, pour le calcul de la réponse impulsionnelle, la réponse du canal peut par exemple être remplacée par la nouvelle estimation de celle-ci, soit l'estimation corrigée.

Selon d'autres variantes de réalisation, on peut remarquer que le calcul de la réponse impulsionnelle, à un emplacement temps/fréquence donné, est fonction de la première estimation lorsque le signal d'erreur présente une valeur inférieure à un second seuil prédéterminé, et de la seconde estimation lorsque le signal d'erreur présente une valeur supérieure ou égale au second seuil prédéterminé.

De manière préférentielle, le signal multiporteuse est modulé selon une modulation multiporteuse de type OFDM.

Le signal multiporteuse peut notamment être de type DRM.

Une telle modulation OFDM permet notamment de résister aux fortes perturbations, dues en particulier aux réflexions sur les couches ionosphériques engendrant des échos et de l'effet Doppler, rencontrées dans les bandes de fréquence AM.

Ainsi, la modulation OFDM est de plus en plus utilisée dans les systèmes de diffusion numérique, car elle est très bien adaptée aux variations du canal radio. L'invention propose alors de diminuer l'influence d'un brouilleur cocanal à bande étroite (signal analogique) d'un signal OFDM.

L'invention concerne également un dispositif de réception d'un signal multiporteuse correspondant.

Selon l'invention, un tel dispositif comprend :

- des premiers moyens d'estimation d'un canal de propagation à partir d'au moins un premier ensemble desdites données, délivrant une première estimation dudit canal de propagation selon une première technique d'estimation tenant compte du ou des pilotes de référence ;
- des seconds moyens d'estimation dudit canal de propagation à partir dudit premier ensemble, délivrant une seconde estimation dudit canal de propagation selon une seconde technique d'estimation, distincte de ladite première technique ;
- des moyens de comparaison desdites première et seconde estimations, délivrant un signal d'erreur ; et
- des moyens de détection d'au moins un signal interférent dans ledit canal de propagation, par analyse d'au moins un pic observé dans ledit signal d'erreur.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1 et 2, précédemment décrites en préambule, illustrent le principe général de la modulation OFDM à partir d'une représentation temps/fréquence d'un canal OFDM ;

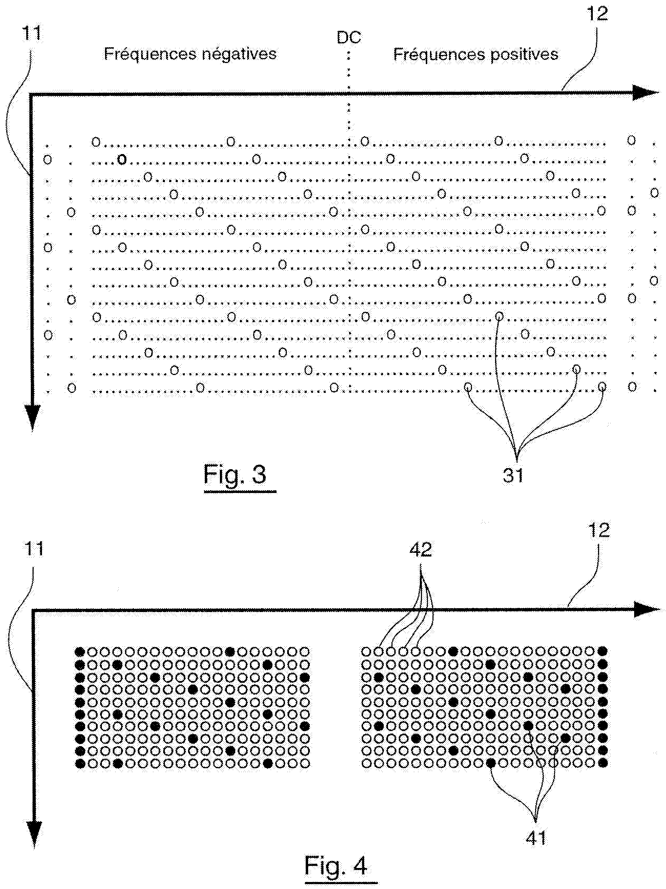

- les figures 3 et 4, également décrites en préambule, présentent deux exemples de structure OFDM : pour un ensemble de symboles DRM en mode A (figure 3) et pour un ensemble de symboles DVB-T (figure 4) ;

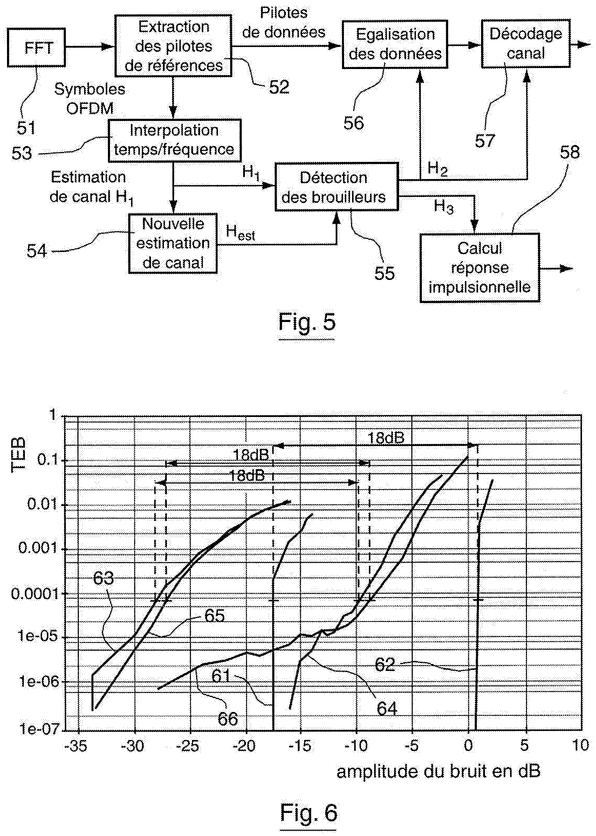

- la figure 5 présente le principe général de l'invention, à l'aide d'un schéma bloc ;
- la figure 6 décrit les performances comparées des différents systèmes avec ou sans mise en oeuvre de l'algorithme de détection et d'annulation de brouilleurs selon l'invention, pour différents types de canaux.

## 6. Description d'un mode de réalisation préférentiel de l'invention

Le principe général de l'invention repose ainsi sur une technique de détection des signaux interférents (brouilleurs) dans le canal de données, utilisant au moins deux estimations successives du canal de propagation, et une technique de correction des données du signal multiporteuse entachées par les signaux interférents.

L'invention vise donc à diminuer, au niveau d'un récepteur, la dégradation apportée par des brouilleurs cocanaux, en particulier à bande étroite, sur un signal multiporteuse de transmission de données, notamment pour des canaux présentant de fortes variations en temps et en fréquence, une fois ces brouilleurs détectés.

Plus précisément, on considère, selon un mode de réalisation préférentiel, un signal multiporteuse de type OFDM, et une transmission dans les bandes AM.

Afin de détecter les pilotes affectés par un ou plusieurs brouilleurs, et de corriger l'estimation de canal, le procédé de réception selon l'invention propose de mettre en oeuvre les étapes suivantes:

- estimation du canal de propagation par interpolation en fréquence et en temps des pilotes de référence (première technique d'estimation) ;

- prédiction linéaire sur l'estimation du canal, suivant l'axe fréquentiel, à partir de la première estimation de canal (seconde technique d'estimation de canal), par exemple au moyen de filtres adaptatifs ;
- détermination d'un signal d'erreur suivant cet axe fréquentiel en comparant les première et seconde estimations du canal de propagation.

Ces différentes étapes sont effectuées sur plusieurs symboles OFDM consécutifs (estimation de proche en proche). On peut ainsi suivre les variations des brouilleurs au rythme des symboles OFDM.

Afin de limiter les détections parasites, le signal d'erreur à deux dimensions (temps/fréquence) ainsi obtenu est ensuite filtré, suivant l'axe temporel, par un filtre lisseur passe bas. On peut ainsi déterminer les pics d'erreur les plus importants du signal d'erreur, pour chaque symbole OFDM correspondant, en les comparant à un premier seuil. Ces pics correspondent à des signaux interférents, encore dits parasites ou brouilleurs, sur le signal multiporteuse de données.

On choisit par exemple ce premier seuil égal à 0,03 pour des porteuses normalisées à 1. Pour les M pics supérieurs à ce premier seuil (par exemple M = 7), on diminue la confiance accordée sur l'estimation du canal sur une région autour de ces M pics.

Plus précisément, pour diminuer cette confiance, l'invention propose soit de réduire la valeur de la confiance associée à chaque porteuse, obtenue dans l'étape précédente du décodage (décodage de type « soft »), soit de mettre à zéro la valeur de la confiance associée à chaque porteuse, c'est-à-dire à mettre à zéro les données associées aux porteuses considérées (décodage de type « hard »).

On traite ainsi de façon binaire (décodage de type « hard ») ou lissée (décodage de type « soft »), les régions autour des porteuses correspondant, dans le plan temps/fréquence, à un pic d'erreur, et donc les porteuses affectées par les signaux interférents.

Du fait de ces suppressions ou atténuations de porteuses d'au moins 10 dB, la réponse du canal de propagation se trouve fortement diminuée aux emplacements temps/fréquence correspondant à ces porteuses corrigées.

Selon l'invention, il est également possible pour le calcul de la réponse impulsionnelle, de remplacer la réponse du canal par la nouvelle estimation de celle-ci.

On présente dorénavant, en relation avec la figure 5, la description fonctionnelle de la technique de réception selon ce mode de réalisation préférentiel de l'invention mettant en oeuvre une modulation de type OFDM dans un système de transmission DRM.

Comme précisé précédemment, la détection de signaux interférents s'effectue par comparaison entre une première estimation du canal de propagation, effectuée à partir des pilotes de référence et une seconde estimation de la valeur du canal sur une porteuse en fonction de toutes les autres (estimation temporelle et/ou fréquentielle de proche en proche).

Au niveau du récepteur, une première étape 51 de transformée de Fourier rapide (« FFT », de l'anglais « Fast Fourier transfom ») permet de récupérer les symboles OFDM du signal multiporteuse de transmission de données.

Le récepteur connaissant l'emplacement temps/fréquence des pilotes de référence, il peut ainsi extraire les pilotes de référence du signal de données, au cours d'une étape référencée 52.

Ces pilotes de référence insérés dans le signal multiporteuse sont utilisés pour estimer le canal de propagation. Ainsi, une fois les synchronisations temporelle et/ou fréquentielle « grossières » établies, il est possible d'obtenir une première estimation du canal par interpolation en temps et/ou en fréquence entre les pilotes de références (étape 53). On obtient une première estimation du canal de propagation (soit encore de la réponse du canal), notée $H_1$, tenant compte du ou des pilotes de référence.

Selon l'invention, une seconde technique d'estimation temporelle et/ou fréquentielle de proche en proche du canal de propagation, distincte de la première technique d'estimation, est ensuite mise en oeuvre au cours d'une étape référencée 54. Plus précisément, à chaque point de la réponse du canal correspondant à chaque porteuse du symbole OFDM, on applique un algorithme de prédiction à base de filtres adaptatifs. On effectue ainsi une prédiction linéaire sur l'estimation de canal. Cette étape 54 délivre une nouvelle estimation du canal de propagation, notée $H_{est}$.

Selon ce mode de réalisation préférentiel de l'invention, les coefficients des filtres adaptatifs sont calculés à partir d'un algorithme de type gradient stochastique (encore appelé LMS pour « Least Mean Square »), de sorte à estimer la valeur du canal en fonction des autres porteuses.

Cette nouvelle estimation du canal comprend généralement une sous-étape d'estimation dans le domaine temporel (indices n), puis une sous-étape d'estimation dans le domaine fréquentiel (indices m). On peut remarquer que pour détecter des brouilleurs à bande étroite, une estimation dans le domaine fréquentiel est suffisante, mais plus délicate à obtenir du fait que le signal est borné en fréquence.

Les première $H_1$ et seconde $H_{est}$ estimations sont ensuite comparées au cours d'une étape 55 de détection des brouilleurs, délivrant un signal d'erreur.

Plus précisément, au cours de l'étape 55, on détermine l'erreur entre la première estimation $H_1$ et la seconde

estimation $H_{est}$ en chaque cellule du plan temps/fréquence (n,m), *où n est un indice temporel et m un indice fréquentiel* :

$$S_e(n,m) = h_1(n,m) - h_{est}(n,m) ,$$

où :

$h_1(n,m)$ est la valeur de la première estimation du canal pour la cellule *(n,m)* ;
$h_{est}(n,m)$ est la valeur de la deuxième estimation du canal pour la cellule *(n,m)* ;
$S_e(n,m)$ correspond à l'erreur entre les deux estimations du canal au point de coordonnées *(n,m)*.

Ce signal d'erreur $S_e$ est ensuite lissé (soit légèrement filtré), toujours au cours de l'étape 55, à partir d'un filtre récursif du premier ordre par exemple, de sorte à minimiser les détections parasites, et à rendre ainsi le signal d'erreur plus fiable.

On obtient ainsi, pour chaque cellule (n,m), un signal d'erreur lissé $\tilde{S}_e(n,m)$ défini par :

$$\tilde{S}_e(n,m) = \alpha * \tilde{S}_e(n-1,m) + (1-\alpha) * S_e(n,m) , \text{ avec, par exemple, } \alpha = 0,95.$$

S'il existe, entre les deux estimations $H_1$ et $H_{est}$, un écart supérieur à un seuil prédéterminé, c'est-à-dire si le signal d'erreur lissé comprend un pic supérieur à un premier seuil $\Psi$ prédéterminé, alors un brouilleur à bande étroite est présent en ce point de coordonnées *(n,m)*.

On peut ainsi détecter l'emplacement temps/fréquence d'un brouilleur dans le canal de propagation. Une fois cet emplacement déterminé, on décide d'appliquer, toujours au cours de l'étape 55, une forte atténuation à la valeur de confiance associée à l'estimation du canal de propagation en cet emplacement temps/fréquence.

Plus précisément, un brouilleur n'étant pas, de manière générale, exactement superposé avec une porteuse d'un symbole OFDM, une perturbation est introduite sur plusieurs porteuses OFDM, et on décide d'atténuer la valeur de confiance associée à l'estimation du canal de propagation dans une région autour de l'emplacement temps/fréquence du signal interférent.

Ainsi, à chaque détection d'un brouilleur, c'est-à-dire à chaque fois que le signal d'erreur lissé $\tilde{S}_e(n,m)$ est supérieur à un premier seuil $\Psi$ prédéterminé ($\Psi$ = 0.03 par exemple, pour des porteuses normalisées à 1), on atténue plusieurs porteuses OFDM autour de la détection (2 avant et 2 après par exemple).

Ainsi :

si $\tilde{S}_e(n,m) < \psi$ alors $h_2(n,m) = h_1(n,m)$
si $\tilde{S}_e(n,m) \geq \psi$ alors $h_2(n,m+i) = Att * h_1(n,m+i)$ $i \in$ [-2,2]
où : $\Psi$ est le seuil limite de détection de la présence d'un brouilleur ;
$h_2(n,m)$ est la nouvelle valeur de la réponse du canal au point de coordonnées *(n,m)*, encore appelée estimation corrigée ;
*Att* correspond à l'atténuation subie par la porteuse OFDM affectée par un brouilleur (par exemple, *Att* > 10dB).

On remarque que deux décodages sont possibles : ou bien on effectue un décodage de type « soft », pour lequel on diminue les valeurs de confiance associées à chaque porteuse, ou bien on effectue un décodage de type « hard», consistant à mettre à zéro les porteuses affectées par des brouilleurs.

Ainsi, il est nécessaire de limiter le nombre de corrections possibles, afin d'éviter une dégradation trop importante des performances intrinsèques du système, liée à l'atténuation d'un trop grand nombre de porteuses des symboles OFDM.

Dans ce mode de réalisation particulier appliqué à un signal de type DRM dans la bande AM, il est préférable de limiter le nombre de pics d'erreur à un maximum de 7 ou 8 pics supérieurs à un premier seuil prédéterminé. On choisit par exemple ce premier seuil égal à 0,03 pour des porteuses normalisées à 1.

Ainsi, si on se limite aux 7 pics d'erreur les plus importants (M=7), et que l'on choisit de réduire la valeur de confiance associée aux deux porteuses précédant et aux deux porteuses suivant une porteuse située à l'emplacement d'un des pics d'erreur (N=2), alors on atténue au maximum 35 porteuses.

Finalement, en sortie de l'étape 55 de détection des brouilleurs, on obtient une estimation $h_2(n,m)$ du canal de propagation, égale à la première estimation du canal $h_1(n,m)$ si la porteuse située à l'emplacement *(n,m)* n'est pas affectée par un signal interférent, et corrigée dans le cas contraire.

Cette estimation corrigée $h_2(n,m)$ va notamment servir à l'égalisation des données au cours d'une étape 56, et au décodage du canal au cours d'une étape 57. L'égalisation des données et le décodage canal sont ainsi améliorés.

**EP 1 810 470 B1**

Pour le calcul de la réponse impulsionnelle au cours de l'étape référencée 58, il est possible d'utiliser la première estimation du canal de propagation $h_1(n,m)$, ou la deuxième estimation du canal de propagation $h_{est}(n,m)$. Ainsi, l'estimation du canal de propagation servant au calcul de la réponse impulsionnelle, notée $h_3(n,m)$ est définie par :

$$h_3(n,m) = \begin{cases} h_1(n,m) & si \ \widetilde{S}_e(n,m) < seuil \\ h_{est}(n,m) & si \ \widetilde{S}_e(n,m) \geq seuil \end{cases}$$

La réponse impulsionnelle une fois calculée permet de déterminer une synchronisation fréquentielle plus fine.

Ainsi, en améliorant la fiabilité du calcul de la réponse impulsionnelle, on peut améliorer la synchronisation du récepteur.

La technique selon l'invention permet ainsi de détecter des brouilleurs dans le canal de données, en utilisant d'une part une technique d'estimation classique par interpolation en temps et en fréquence des pilotes de référence connus du récepteur, et d'autre part une estimation de proche en proche. On peut ainsi améliorer les performances du système de réception, en mettant en oeuvre une correction de l'estimation du canal de propagation, permettant une meilleure synchronisation temporelle et/ou fréquentielle.

On présente désormais, en relation avec la figure 6, les performances comparées de différents systèmes avec ou sans mise en oeuvre de l'algorithme d'annulation de brouilleurs selon l'invention, pour différents types de canaux.

Ces courbes de résultats sont obtenues au moyen d'une chaîne de simulation de radio numérique (DRM) dans les bandes AM.

Comme précisé précédemment, dans ce mode de réalisation préférentiel, le signal multiporteuse de type OFDM est perturbé par au moins un brouilleur, par exemple un brouilleur à bande étroite.

Ainsi, en simulation, on insère un brouilleur de type porteuse pure, dont on fait varier l'amplitude et la fréquence pour simuler une diffusion AM, sur le signal multiporteuse de données.

Dans cet exemple de simulation, le mode de transmission DRM retenu correspond à une transmission en ondes courtes, c'est-à-dire en mode B (soit environ 210 porteuses dans 10kHz). Les cellules sont modulées selon une modulation 64QAM, avec un rendement de codage de 0,6 (le plus usité actuellement dans les transmissions internationales). La bande passante du signal est de 10kHz et le débit audio est d'environ 21kbits/s.

Le brouilleur est une porteuse pure placée à 200Hz de la fréquence centrale de DRM.

Les tests sont effectués avec différents canaux de propagation, tels que ceux décrits dans la norme DRM (ETSI ES 201 980).

Ainsi, sur la figure 6:

- la courbe 61 illustre le taux d'erreur binaire (TEB) en fonction de l'amplitude du bruit en dB pour le canal n°1 (un seul trajet), tel que défini dans la norme DRM, sans mise en oeuvre de la technique de réception selon l'invention ;
- la courbe 62 illustre le TEB en fonction de l'amplitude du bruit en dB pour le canal n°1 avec mise en oeuvre de la technique de réception selon l'invention ;
- la courbe 63 illustre le TEB en fonction de l'amplitude du bruit en dB pour le canal n°3 (quatre trajets affectés par un effet Doppler), sans mise en oeuvre de la technique de réception selon l'invention ;
- la courbe 64 illustre le TEB en fonction de l'amplitude du bruit en dB pour le canal n°3 avec mise en oeuvre de la technique de réception selon l'invention ;
- la courbe 65 illustre le TEB en fonction de l'amplitude du bruit en dB pour le canal n°5 (deux trajets de même puissance affectés par un effet Doppler), sans mise en oeuvre de la technique de réception selon l'invention ;
- la courbe 66 illustre le TEB en fonction de l'amplitude du bruit en dB pour le canal n°5 avec mise en oeuvre de la technique de réception selon l'invention.

On rappelle que le canal n°3 (quatre trajets affectés par un effet Doppler), est défini dans la norme DRM par :

| Canal n° 3: US Consortium | | Bon typique/moyen mauvais | | HF MF |
|---|---|---|---|---|
| | trajet 1 | trajet 2 | trajet 3 | trajet 4 |
| Retard ($\Delta_k$) | 0 | 0,7 ms | 1,5 ms | 2,2 ms |
| Gain du trajet, RMS ($\rho_k$) | 1 | 0,7 | 0,5 | 0,25 |
| Décalage Doppler ($D_{sh}$) | 0,1 Hz | 0,2 Hz | 0,5 Hz | 1,0 Hz |

9

(suite)

| Canal n° 3: US Consortium | | Bon typique/moyen mauvais | | HF MF |
|---|---|---|---|---|
| | trajet 1 | trajet 2 | trajet 3 | trajet 4 |
| Etalement Doppler ($D_{sp}$) | 0,1 Hz | 0,5 Hz | 1,0 Hz | 2,0 Hz |

et que le canal n°5 (deux trajets de même puissance affectés par un effet Doppler) est défini par :

| Canal n° 5 | | Bon typique/moyen mauvais | | HF |
|---|---|---|---|---|
| | trajet 1 | trajet 2 | trajet 3 | trajet 4 |
| Retard ($\Delta_k$) | 0 | 4 ms | | |
| Gain du trajet, RMS ($\rho_k$) | 1 | 1 | | |
| DécalageDoppler ($D_{sh}$) | 0 | 0 | | |
| Etalement Doppler ($D_{sp}$) | 2 Hz | 2 Hz | | |

Les performances de la technique de réception selon l'invention, présentées en la figure 6, permettent d'évaluer le gain apporté par cette technique.

On constate que pour un taux d'erreur binaire de valeur $10^{-4}$ (critère retenu par le consortium DRM), le gain est de l'ordre de 18dB entre les performances obtenues sans l'algorithme d'annulation de brouilleur et les performances obtenues avec l'algorithme d'annulation de brouilleurs, quel que soit le canal de propagation.

D'autres simulations ont également été réalisées, pour différentes positions en fréquence du brouilleur. Les résultats, pour un TEB de $10^{-4}$, sont reportés dans le tableau suivant :

| Position du brouilleur | -3200Hz | | | -200Hz | | | 10Hz | | | 3200Hz | | |
|---|---|---|---|---|---|---|---|---|---|---|---|---|
| N° du canal | 1 | 3 | 5 | 1 | 3 | 5 | 1 | 3 | 5 | 1 | 3 | 5 |
| Gain en dB | 8 | 6 | 7 | 8 | 7 | 7 | 13 | 11 | 11 | 8 | 18 | 16 |

Ainsi, le gain apporté par la technique de réception selon l'invention est notable, même vis-à-vis des canaux très fluctuants rencontrés en ondes courtes par exemple.

Cette solution ne nécessite pas (ou peu) de modifications des étages d'entrée du décodeur de données et de la tête HF (pour haute fréquence) du récepteur. Elle est donc simple à mettre en oeuvre et peu coûteuse.

Bien entendu, la présente invention ne se limite pas aux détails des formes de réalisation décrits ici à titre d'exemple, mais s'étend au contraire aux modifications à la portée de l'homme de l'art, sans sortir du cadre de l'invention.

On notera d'ailleurs que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de réception d'un signal multiporteuse formé d'une succession temporelle de symboles comprenant chacun une pluralité de porteuses portant des données, au moins un desdits symboles comprenant au moins un pilote de référence, ce procédé de réception met en oeuvre les étapes suivantes :

- première estimation (53) d'un canal de propagation à partir d'au moins un premier ensemble desdites données, selon une première technique d'estimation tenant compte du ou desdits pilotes de référence ; ce procédé est **caractérisé en ce qu'**il comporte les étapes suivantes:

- au moins une seconde estimation (54) dudit canal de propagation à partir dudit premier ensemble, selon une seconde technique d'estimation distincte de ladite première technique ;
- comparaison desdites première et seconde estimations, délivrant un signal d'erreur ;
- détection de l'emplacement d'au moins un signal interférent dans ledit canal de propagation, par analyse d'au moins un pic observé dans ledit signal d'erreur, dit pic d'erreur.

2. Procédé de réception selon la revendication 1, **caractérisé en ce qu'**il comprend également une étape de correction d'au moins une desdites estimations, en fonction dudit signal d'erreur, de sorte à délivrer une estimation corrigée.

3. Procédé de réception selon la revendication 2, **caractérisé en ce que** ladite étape de correction est mise en oeuvre pour au moins un desdits pics d'erreur.

4. Procédé de réception selon la revendication 3, **caractérisé en ce que** ladite étape de correction d'erreur est mise en oeuvre pour au moins un pic d'erreur supérieur à un premier seuil prédéterminé.

5. Procédé de réception selon la revendication 4, **caractérisé en ce que** ledit premier seuil prédéterminé est compris entre 0,01 et 0,03, pour des fréquences porteuses normalisées à 1.

6. Procédé de réception selon l'une quelconque des revendications 3 à 5, **caractérisé en ce que** ladite étape de correction met en oeuvre une réduction d'une valeur de confiance associée à au moins une desdites porteuses du signal multiporteuse correspondant, dans le plan temps/fréquence, au voisinage d'au moins un desdits pics d'erreur.

7. Procédé de réception selon la revendication 6, **caractérisé en ce que** ladite réduction d'une valeur de confiance est mise en oeuvre sur les valeurs de confiance associées aux N porteuses précédant et/ou aux N porteuses suivant une porteuse située à l'emplacement d'un desdits pics d'erreur, dans le temps et/ou en fréquence.

8. Procédé de réception selon la revendication 7, **caractérisé en ce que** N est égal à 2.

9. Procédé de réception selon l'une quelconque des revendications 3 à 5, **caractérisé en ce que** ladite étape de correction met en oeuvre une suppression d'au moins une desdites porteuses du signal multiporteuse correspondant, dans le plan temps/fréquence, au voisinage d'au moins un desdits pics d'erreur.

10. Procédé de réception selon l'une quelconque des revendications 3 à 9, **caractérisé en ce que** ladite étape de correction n'agit que sur un nombre maximal prédéterminé M de pics d'erreur, à un instant donné.

11. Procédé de réception selon la revendication 10, **caractérisé en ce que** M est égal à 7 ou 8.

12. Procédé de réception selon l'une quelconque des revendications 2 à 11, **caractérisé en ce qu'**il comprend également une étape de lissage dudit signal d'erreur, précédant ladite étape de correction.

13. Procédé de réception selon la revendication 12, **caractérisé en ce que** ladite étape de lissage met en oeuvre au moins un filtre récursif.

14. Procédé de réception selon l'une quelconque des revendications 1 à 13, **caractérisé en ce que** ladite première technique d'estimation met en oeuvre une étape d'interpolation en temps et/ou en fréquence, à partir du ou desdits pilotes de référence.

15. Procédé de réception selon l'une quelconque des revendications 1 à 14, **caractérisé en ce que** ladite seconde technique d'estimation est une estimation temporelle et/ou fréquentielle de proche en proche mettant en oeuvre une étape de filtrage adaptatif.

16. Procédé de réception selon la revendication 15, **caractérisé en ce que** ladite étape de filtrage met en oeuvre un algorithme de type gradient stochastique.

17. Procédé de réception selon l'une quelconque des revendications 2 à 16, **caractérisé en ce qu'**il met en oeuvre, en outre, au moins une des étapes suivantes :

- égalisation (56) des données en fonction de ladite estimation corrigée ;

- décodage de canal (57) en fonction de ladite estimation corrigée ;
- calcul de la réponse impulsionnelle (58) dudit canal de propagation, en fonction dudit signal d'erreur et desdites première et/ou seconde estimations et/ou de ladite estimation corrigée.

18. Procédé de réception selon la revendication 17, **caractérisé en ce que** ladite étape de calcul de la réponse impulsionnelle, à un emplacement temps/fréquence donné, est fonction de ladite première estimation lorsque ledit signal d'erreur présente une valeur inférieure à un second seuil prédéterminé, et de ladite seconde estimation lorsque ledit signal d'erreur présente une valeur supérieure ou égale audit second seuil prédéterminé.

19. Procédé de réception selon l'une quelconque des revendications 1 à 18, **caractérisé en ce que** ledit signal multiporteuse est de type OFDM.

20. Procédé de réception selon la revendication 19, **caractérisé en ce que** ledit signal multiporteuse est de type DRM.

21. Dispositif de réception d'un signal multiporteuse formé d'une succession temporelle de symboles comprenant chacun une pluralité de porteuses portant des données, au moins un desdits symboles comprenant au moins un pilote de référence, ce dispositif comprend :

- des premiers moyens d'estimation (53) d'un canal de propagation à partir d'au moins un premier ensemble desdites données, délivrant une première estimation dudit canal de propagation selon une première technique d'estimation tenant compte du ou desdits pilotes de référence ; ce dispositif est **caractérisé en ce qu'**il comprend:

- des seconds moyens d'estimation (54) dudit canal de propagation à partir dudit premier ensemble, délivrant une seconde estimation dudit canal de propagation selon une seconde technique d'estimation distincte de ladite première technique ;
- des moyens de comparaison desdites première et seconde estimations, délivrant un signal d'erreur ; et
- des moyens de détection de l'emplacement d'au moins un signal interférent dans ledit canal de propagation, par analyse d'au moins un pic observé dans ledit signal d'erreur, dit pic d'erreur.

## Patentansprüche

1. Verfahren zum Empfang eines Mehrträgersignals, das aus einer zeitlichen Folge von Symbolen gebildet ist, die jeweils mehrere Träger aufweisen, die Daten tragen, wobei mindestens eines der Symbole mindestens einen Referenzpilotton aufweist, wobei dieses Verfahren zum Empfang die folgenden Schritte umsetzt:

- erstes Schätzen (53) eines Ausbreitungskanals ausgehend von mindestens einem ersten Satz der Daten nach einer ersten Schätzungstechnik unter Berücksichtigung des oder der Referenzpilottöne;

wobei dieses Verfahren **dadurch gekennzeichnet ist, dass** es die folgenden Schritte aufweist:

- mindestens ein zweites Schätzen (54) des Ausbreitungskanals ausgehend von dem ersten Satz nach einer zweiten Schätzungstechnik, die von der ersten Technik verschieden ist;
- Vergleichen der ersten und zweiten Schätzung, wodurch ein Fehlersignal abgegeben wird;
- Ermitteln der Position von mindestens einem Interferenzsignal in dem Ausbreitungskanal durch Analyse von mindestens einem Peak, der in dem Fehlersignal beobachtet wird, der Fehler-Peak genannt wird.

2. Verfahren zum Empfang nach Anspruch 1, **dadurch gekennzeichnet, dass** es ebenfalls einen Schritt der Korrektur von mindestens einer der Schätzungen in Abhängigkeit von dem Fehlersignal derart aufweist, um eine korrigierte Schätzung abzugeben.

3. Verfahren zum Empfang nach Anspruch 2, **dadurch gekennzeichnet, dass** der Schritt der Korrektur für mindestens einen der Fehler-Peaks umgesetzt wird.

4. Verfahren zum Empfang nach Anspruch 3, **dadurch gekennzeichnet, dass** der Schritt der Fehlerkorrektur für mindestens einen Fehler-Peak umgesetzt wird, der größer als ein erster vorbestimmter Schwellenwert ist.

5. Verfahren zum Empfang nach Anspruch 4, **dadurch gekennzeichnet, dass** der erste vorbestimmte Schwellenwert für auf 1 normierte Trägerfrequenzen zwischen 0,01 und 0,03 liegt.

6. Verfahren zum Empfang nach einem der Ansprüche 3 bis 5, **dadurch gekennzeichnet, dass** der Schritt der Korrektur eine Reduzierung eines Vertrauenswertes umsetzt, der mit mindestens einem der Träger des Multiträgersignals verbunden ist, das in der Zeit/Frequenz-Ebene der Nähe von mindestens einem der Fehler-Peaks entspricht.

7. Verfahren zum Empfang nach Anspruch 6, **dadurch gekennzeichnet, dass** die Reduzierung eines Vertrauenswertes an den Vertrauenswerten umgesetzt wird, die mit den N Trägern, die einem Träger vorangehen und/oder mit den N Trägern verbunden sind, die einem Träger nachfolgen, der sich zeitlich und/oder frequenzmäßig an der Stelle von einem der Fehler-Peaks befindet.

8. Verfahren zum Empfang nach Anspruch 7, **dadurch gekennzeichnet, dass** N gleich 2 ist.

9. Verfahren zum Empfang nach einem der Ansprüche 3 bis 5, **dadurch gekennzeichnet, dass** der Schritt der Korrektur eine Unterdrückung von mindestens einem der Träger des Multiträgersignals umsetzt, das in der Zeit/Frequenz-Ebene der Nähe von mindestens einem der Fehler-Peaks entspricht.

10. Verfahren zum Empfang nach einem der Ansprüche 3 bis 9, **dadurch gekennzeichnet, dass** der Schritt der Korrektur nur auf eine vorbestimmte maximale Anzahl M von Fehler-Peaks zu einem gegebenen Zeitpunkt wirkt.

11. Verfahren zum Empfang nach Anspruch 10, **dadurch gekennzeichnet, dass** M gleich 7 oder 8 ist.

12. Verfahren zum Empfang nach einem der Ansprüche 2 bis 11, **dadurch gekennzeichnet, dass** es auch einen Schritt des Glättens des Fehlersignals vor dem Schritt der Korrektur aufweist.

13. Verfahren zum Empfang nach Anspruch 12, **dadurch gekennzeichnet, dass** der Schritt des Glättens mindestens einen rekursiven Filter einsetzt.

14. Verfahren zum Empfang nach einem der Ansprüche 1 bis 13, **dadurch gekennzeichnet, dass** die erste Schätzungstechnik einen Schritt der Zeit- und/oder Frequenzinterpolation ausgehend von dem oder den Referenzpilottönen durchführt.

15. Verfahren zum Empfang nach einem der Ansprüche 1 bis 14, **dadurch gekennzeichnet, dass** die zweite Schätzungstechnik eine nach und nach erfolgende Zeit-und/oder Frequenzschätzung ist, die einen Schritt der adaptiven Filterung durchführt.

16. Verfahren zum Empfang nach Anspruch 15, **dadurch gekennzeichnet, dass** der Schritt der Filterung einen Algorithmus vom Typ des stochastischen Gradientenalgorithmus implementiert.

17. Verfahren zum Empfang nach einem der Ansprüche 2 bis 16, **dadurch gekennzeichnet, dass** es ferner mindestens einen der folgenden Schritte durchführt:

- Entzerren (56) der Daten in Abhängigkeit von der korrigierten Schätzung;
- Kanaldecodieren (57) in Abhängigkeit von der korrigierten Schätzung;
- Berechnen der Impulsantwort (58) des Ausbreitungskanals in Abhängigkeit von dem Fehlersignal und der ersten und/oder zweiten Schätzung und/oder der korrigierten Schätzung.

18. Verfahren zum Empfang nach Anspruch 17, **dadurch gekennzeichnet, dass** der Schritt des Berechnens der Impulsantwort an einer bestimmten Zeit/Frequenz-Position von der ersten Schätzung abhängt, wenn das Fehlersignal einen Wert aufweist, der niedriger als ein zweiter vorbestimmter Schwellenwert ist, und von der zweiten Schätzung, wenn das Fehlersignal einen Wert aufweist, der höher als oder gleich dem zweiten vorbestimmten Schwellenwert ist.

19. Verfahren zum Empfang nach einem der Ansprüche 1 bis 18, **dadurch gekennzeichnet, dass** das Multiträgersignal vom Typ des OFDM-Signals ist.

**20.** Verfahren zum Empfang nach Anspruch 19, **dadurch gekennzeichnet, dass** das Multiträgersignal vom Typ des DRM-Signals ist.

**21.** Vorrichtung zum Empfang eines Mehrträgersignals, das aus einer zeitlichen Folge von Symbolen gebildet ist, die jeweils mehrere Träger aufweisen, die Daten tragen, wobei mindestens eines der Symbole mindestens einen Referenzpilotton aufweist,
wobei diese Vorrichtung Folgendes aufweist:

- erste Mittel zum Schätzen (53) eines Ausbreitungskanals ausgehend von mindestens einem ersten Satz der Daten, die eine erste Schätzung des Ausbreitungskanals nach einer ersten Schätzungstechnik unter Berücksichtigung des oder der Referenzpilottöne abgeben;

wobei diese Vorrichtung **dadurch gekennzeichnet ist, dass** sie Folgendes aufweist:

- zweite Mittel zum Schätzen (54) des Ausbreitungskanals ausgehend von dem ersten Satz, die eine zweite Schätzung des Ausbreitungskanals nach einer zweiten Schätzungstechnik, die von der ersten Technik verschieden ist, ausgeben;
- Mittel zum Vergleichen der ersten und zweiten Schätzung, die ein Fehlersignal abgeben, und
- Mittel zum Ermitteln der Position von mindestens einem Interferenzsignal in dem Ausbreitungskanal durch Analyse von mindestens einem Peak, der in dem Fehlersignal beobachtet wird, der Fehler-Peak genannt wird.

**Claims**

**1.** A reception method for receiving of a multicarrier signal consisting of a sequence of symbols in time, each symbol comprising a plurality of carriers carrying data, at least one of the symbols comprising at least one reference pilot, said reception method implements the following steps:

- a first estimation (53) of a propagation channel, from at least a first set of said data, according to a first estimating technique taking account of said reference pilot(s);

said reception method being **characterized in that** it implements:

- at least a second estimation (54) of said propagation channel, from said first set, according to a second estimating technique distinct from said first technique,
- comparison between said first and second estimations, outputting an error signal;
- detection of the position of at least one interfering signal in said propagation channel, by analysis of at least one peak observed in said error signal, called error peak.

**2.** Reception method according to claim 1, **characterised in that** it also includes a step to correct at least one of said estimations depending on said error signal, so as to output a corrected estimation.

**3.** Reception method according to claim 2, **characterised in that** said correction step is implemented for at least one of said error peaks.

**4.** Reception method according to claim 3, **characterised in that** said correction step is implemented for at least one error peak greater than a first predetermined threshold.

**5.** Reception method according to claim 4, **characterised in that** said first predetermined threshold is between 0.01 and 0.03 for carrier frequencies normalised to 1.

**6.** Reception method according to any one of claims 3 to 5, **characterised in that** said correction step implements a reduction of a confidence value associated with at least one of said carriers of the multicarrier signal, which are close to at least one of said error peaks in the time / frequency domain.

**7.** Reception method according to claim 6, **characterised in that** the confidence value is reduced for confidence values associated with the N carriers before and / or the N carriers after a carrier located at the position of one of said error peaks, in time and / or in frequency.

8. Reception method according to claim 7, **characterised in that** N is chosen to be equal to 2.

9. Reception method according to any one of claims 3 to 5, **characterised in that** said correction step implements an elimination of at least one of said carriers of the corresponding multicarrier signal, which are close to at least one of said error peaks in the time / frequency domain.

10. Reception method according to any one of claims 3 to 9, **characterised in that** said correction step only acts on a predetermined maximum number M of error peaks at a given instant.

11. Reception method according to claim 10, **characterised in that** M is set equal to 7 or 8.

12. Reception method according to any one of claims 2 to 11, **characterised in that** it also comprises a step to smooth said error signal before said correction step.

13. Reception method according to claim 12, **characterised in that** said smoothing step implements at least one recursive filter.

14. Reception method according to set forth in any one of claims 1 to 13, **characterised in that** said first estimating technique uses a step of interpolation in time and / or in frequency, from said reference pilots.

15. Reception method according to set forth in any one of claims 1 to 14, **characterised in that** said second estimating technique is a successive approximation time and / or frequency estimation using an adaptive filtering step.

16. Reception method according to set forth in claim 15, **characterised in that** said filter step comprises a stochastic gradient type algorithm.

17. Reception method set forth in any one of claims 2 to 16, **characterised in that** it also uses at least one of the following steps:

- equalisation (56) of data as a function of said corrected estimation;
- channel decoding (57) as a function of said corrected estimation;
- calculating (58) the pulse response of said propagation channel as a function of said error signal and said first and / or second estimations and / or said corrected estimation.

18. Reception method according to claim 17, **characterised in that** said step for calculation of the pulse response at a given time / frequency position depends on the first estimation when the value of the error signal is lower than a second predetermined threshold, and it depends on the second estimation when the value of the error signal is greater than or equal to the second predetermined threshold.

19. Reception method according to any one of claims 1 to 18, **characterised in that** said multicarrier signal is of the OFDM type.

20. Reception method according to claim 19, **characterised in that** said multicarrier signal is of the DRM type.

21. Device for the reception of a multicarrier signal consisting of a sequence of symbols in time, each symbol comprising a plurality of carriers carrying data, at least one of the symbols comprising at least one reference pilot, said device comprises:

- first means (53) of estimating a propagation channel from at least one first set of said data, outputting a first estimation of said propagation channel according to a first estimating technique taking account of said reference pilot(s);

said device being **characterized in that** it comprises:

- second means (54) of estimating said propagation channel from said first set, outputting a second estimation of said propagation channel according to a second estimating technique, distinct from said first technique;
- means of comparison of said first and second estimations, outputting an error signal; and
- means of detecting the position of at least one interfering signal in said propagation channel by analysis at least one peak observed in said error signal, called error peak.

Fig. 1

Fig. 2

11    DC    12
Fréquences négatives    Fréquences positives

Fig. 3    31

11    42    12

41

Fig. 4

EP 1 810 470 B1

Fig. 5

amplitude du bruit en dB

Fig. 6

EP 1 810 470 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1087559 A
- CA 1186742
- EP 1339196 A
- US 5359329 A
- FR 2753592